# EUROPEAN PATENT SPECIFICATION

(11) **EP 3 697 173 B1**
(45) Date of publication and mention of the grant of the patent: **13.10.2021**
(21) Application number: 19215672.7
(22) Date of filing: 12.12.2019
(51) Int. Cl.: H05B 1/02, F24H 1/18, G05B 11/28, G05D 23/19

(54) **VARIABLE POWER WATER HEATER, CONTROL SYSTEM THEREFOR AND CONTROL METHOD THEREOF**
WASSERERHITZER MIT VARIABLER LEISTUNG, STEUERSYSTEM DAFÜR UND STEUERVERFAHREN DAVON
CHAUFFE-EAU À PUISSANCE VARIABLE, SYSTÈME DE CONTRÔLE À CET EFFET ET PROCÉDÉ DE CONTRÔLE À CET EFFET

(30) Priority: 15.02.2019 US 201916277796
(43) Date of publication of application: 19.08.2020
(73) Proprietor: B/E Aerospace, Inc., Winston Salem, NC 27105 (US)
(72) Inventor: HASIRUMANE, Avinash Srikantegowda, Mukilteo WA 98275 (US); STEENSTRA TOUSSAINT, Tyson J., Marysville, WA 98270 (US); BUNIAK, Bradley J., Woodinville, WA 98072 (US)
(74) Representative: Dehns

(56) References cited:
- EP-A1- 2 375 854
- JP-A- 2002 295 907
- JP-A- 2017 058 040
- US-A1- 2007 272 678

## Description

### BACKGROUND

Water heaters are typically designed with fixed hardware for powering their heating elements. This hardware may have fixed power requirements. Consequently, an entire water heater, or at least the hardware for powering its heating element, may need to be changed when the water heater is implemented in a facility (e.g., an aircraft or other passenger vehicle, a building, etc.) that does not meet the power requirements of the water heater. JP 2002 295907A describes a sanitary cleaning device; JP 2017 058040 A describes a hot water system for an aircraft disclosing the possibility of using either thyristors, triacs or MOSFETs as switches interfacing the input power supply lines and the output power lines towards an electrical heater for a water tank, wherein a control system performs PWM control over the switch or switches for controlling the supply of power to the electrical heater; EP 2375854 A1 describes a heater for a vehicular fluid tank; and US 2007/272678 A1 describes an apparatus and method of computer component heating.

### SUMMARY

The invention is exclusively defined by the appended claims. In a first aspect, corresponding to independent claim 1, a control system for a variable power water heater is provided. In a second aspect, corresponding to independent claim 8, a method of controlling a variable power water heater is provided.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a block diagram illustrating an aircraft environment that includes a variable power water heater, in accordance with one or more embodiments of this disclosure;
FIG. 1B is a block diagram illustrating a controller for the variable power water heater, in accordance with one or more embodiments of this disclosure; and
FIG. 2 is a flow diagram illustrating a method for controlling a variable power water heater, in accordance with one or more embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of subcombination of two or more such features, along with any other features which may not necessarily be expressly described or inherently present in the instant disclosure.

A variable power water heater is disclosed. Often, water heaters are designed with fixed hardware for powering their heating elements. This hardware may have fixed power requirements. Consequently, an entire water heater, or at least the hardware for powering its heating element, may need to be changed when the water heater is implemented in a facility (e.g., an aircraft or other passenger vehicle, a building, etc.) that does not meet the power requirements of the water heater. The variable power water heater disclosed herein is a software-controlled water heater that can adjust its duty cycle to meet selected power requirements or power budget of an aircraft or any other setting/facility in which the variable power water heater is installed

The variable power water heater may be configured for use in a variety of settings or facilities, such as, but not limited to, an aircraft lavatory (e.g., for a faucet, shower, etc.), an aircraft galley (e.g., for a coffee maker, faucet, dishwasher, etc.), or any other vehicle or building facility. Although an aircraft environment is discussed throughout this disclosure, the variable power water heater and/or control system for the variable power water heater may be implemented in any other setting or facility. In this regard, the examples and embodiments provided herein are not intended as limitations of the present disclosure unless otherwise specified in the claims.

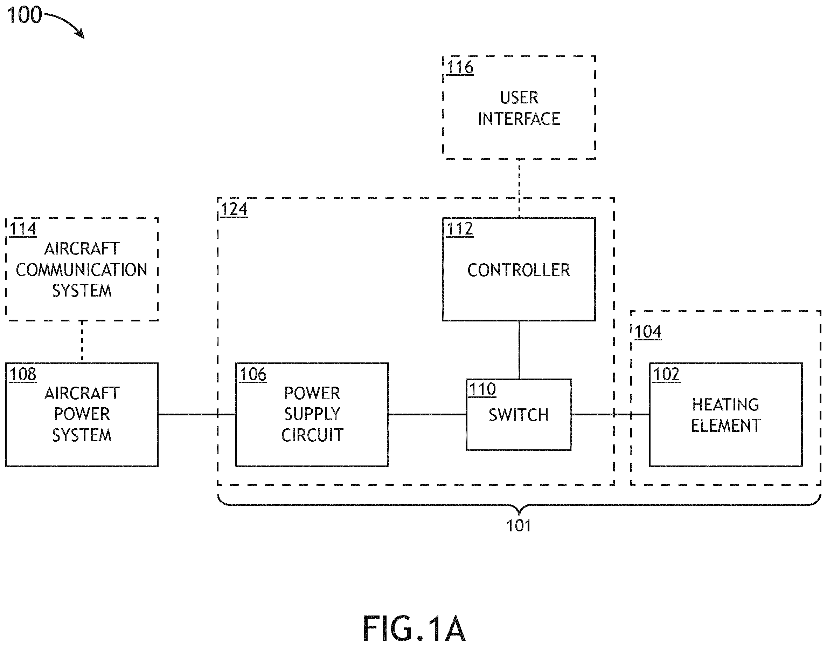

FIG. 1A is a block diagram illustrating an aircraft environment/system 100 that includes a variable power water heater 101, in accordance with one or more embodiments of this disclosure. In some embodiments, the variable power water heater 101 includes a water tank 104, a heating element 102, a power supply circuit 106, a switch 110, and a controller 112. In other examples not necessarily covered by the invention, one or more of the components (e.g., water tank 104, heating element 102, power supply circuit 106, switch 110, and/or controller 112) may be structurally separate from the variable power water heater 101. For example, the power supply circuit 106, switch 110, and/or controller 112 may be coupled to the variable power water heater 101 via an external connection interface (e.g., an external port or connector).

The heating element (or elements) 102 may be disposed within or coupled to the water tank 104. For example, in some embodiments, the heating element 102 may be disposed within the water tank 104 such that the heating element 102 becomes at least partially submerged when the water tank 104 is filled. In other embodiments, the heating element 102 (or another (e.g., second, third, etc.) heating element 102) may be coupled to a side or bottom portion of the water tank 104. For example, the heating element 102 may be coupled or otherwise held in contact with an internal or external side or bottom surface of the water tank 102. In other examples not covered by the invention, the heating element 102 (or elements) may be configured to heat one or more tubes or pipes that flow the water. For example, the variable power water heater 101 may be a tankless water heater and/or configured with an auxiliary heating system. Additionally, the water tank 104 or heated tube/pipe may be continuously or periodically filled by portable water supplied from a main water tank of the aircraft.

The power supply circuit 106 may be configured to generate a power signal for the heating element 102. The power supply circuit 106 (e.g., a power supply unit (PSU), or the like) r may be coupled to a power source. For example, the power supply circuit 106 may be connected to an aircraft power system 108. The aircraft power system 108 may be configured to supply 115V, 400Hz aircraft power. The aircraft power system 108 may be configured to provide aircraft power at other voltages (e.g., at any voltage in the range of 100-240V, etc.) or other frequencies (e.g., at any frequency in the range of 100-1000Hz, etc.).

The switch 110 may be configured to couple the power supply circuit 106 to the heating element 102. For example, the switch 110 can be configured to connect the power supply circuit 106 to the heating element 102 in a closed state and disconnect the power supply circuit 106 from the heating element 102 in an open state. The switch 110 may be part of the power supply circuit 106. The switch 110 may be a separate component disposed in between the power supply circuit 106 and the heating element 102. The switch 110 may be a triac (also known as a bidirectional triode thyristor or bilateral triode thyristor) or any other electrical or electromechanical switch element that connects the power supply circuit 106 to the heating element 102.

The controller 112 may be configured to toggle the switch 110 according to a pulse width modulation (PWM) scheme to control a duty cycle of the power signal transmitted from the power supply circuit 106 to the heating element 102. In this manner, water in the water tank 104 and/or heated tube/pipe can be heated by the heating element 102, and the power to the heating element 102 can be controlled by toggling the switch 110 according to the PWM-driven duty cycle to achieve target power requirements for the aircraft.

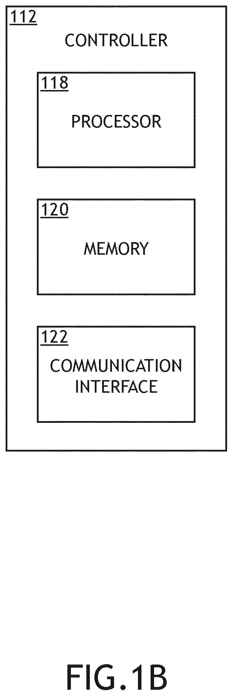

As shown in FIG. 1B, the controller 112 may include a processor 118, memory 120, and a communication interface 122. The processor 118 provides processing functionality for at least the controller 112 and can include any number of processors, micro-controllers, circuitry, field programmable gate array (FPGA) or other processing systems, and resident or external memory for storing data, executable code, and other information accessed or generated by the controller 112. The processor 118 can execute one or more software programs stored in a non-transitory computer readable medium (e.g., memory 120) that implement techniques described herein. The processor 118 is not limited by the materials from which it is formed, or the processing mechanisms employed therein and, as such, can be implemented via semiconductor(s) and/or transistors (e.g., using electronic integrated circuit (IC) components), and so forth.

The memory 120 can be an example of tangible, computer-readable storage medium that provides storage functionality to store various data and/or program code associated with operation of the controller 112/processor 118, such as software programs and/or code segments, or other data to instruct the processor 118, and possibly other components of the controller 112, to perform the functionality described herein. Thus, the memory 120 can store data, such as a program of instructions for operating the controller 112, including its components (e.g., processor 118, communication interface 122, etc.), and so forth. It should be noted that while a single memory 120 is described, a wide variety of types and combinations of memory (e.g., tangible, non-transitory memory) can be employed. The memory 120 can be integral with the processor 118, can comprise stand-alone memory, or can be a combination of both. Some examples of the memory 120 can include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface 122 can be operatively configured to communicate with components of the controller 112. For example, the communication interface 122 can be configured to retrieve data from the processor 118 or other devices (e.g., aircraft power system 108, aircraft communication system 114, a temperature sensor (e.g., for sensing water temperature), user interface 116, etc.), transmit data for storage in the memory 120, retrieve data from storage in the memory 120, and so forth. The communication interface 122 can also be communicatively coupled with the processor 118 to facilitate data transfer between components of the controller 112 and the processor 118. It should be noted that while the communication interface 122 is described as a component of the controller 112, one or more components of the communication interface 122 can be implemented as external components communicatively coupled to the controller 112 via a wired and/or wireless connection. The controller 112 can also include and/or connect to one or more input/output (I/O) devices (e.g., user interface 116 or other human machine interface (HMI) devices) via the communication interface 122. The communication interface 122 may include a transmitter, receiver, transceiver, physical connection interface, or any combination thereof.

The power supply circuit 106 may include fixed hardware, and the power to the heating element 102 may be varied by toggling the switch 110 via the controller 112 to implement a selected PWM scheme. In other embodiments, the power supply circuit 106 and the controller 112 may be integrated into a combined power supply and control circuit 124. The power supply and control circuit 124 may be configured to output a PWM power signal with a controlled duty cycle. In either case, the controller 112 may be configured to execute software to determine an identifier (e.g., power system identifier, aircraft type, etc.) or one or more power source characteristics (e.g., supported wattage) and control the duty cycle of the power signal to power the heating element 102 according to the power source characteristics/requirements of the aircraft.

The controller 112 of the invention is configured to detect an identifier and determine the PWM scheme based on the identifier. For example, the controller 112 may be configured to detect the identifier via an interface connection (e.g., identifier code sequence or programming detected via one or more connector pins) between the controller 112 and an aircraft communication system 114 (e.g., Controller Area Network (CAN) data bus, or the like) and/or the aircraft power system 108 itself. In another example, the controller 112 can be configured to receive the identifier in a data signal communicated via the aircraft communication system 114 or via user interface 116.

The controller 112 may be configured to determine the PWM scheme based on the identifier by comparing the identifier with a lookup table including a plurality of identifiers and a plurality of PWM schemes corresponding to the plurality of identifiers. For example, various aircraft types and/or power systems may be stored in a listing with corresponding PWM schemes or duty cycles for achieving the target power requirements for the aircraft.

The controller 112 Z may be ie- configured to detect one or more power source characteristics and determine the PWM scheme based on the one or more power source characteristics. For example, the controller 112 may be configured to detect the one or more power source characteristics via an interface connection (e.g., code sequence or programming detected via one or more connector pins) between the controller 112 and an aircraft communication system 114 (e.g., Controller Area Network (CAN) data bus, or the like) and/or the aircraft power system 108 itself. In another example, the controller 112 can be configured to receive the one or more power source characteristics in a data signal communicated via the aircraft communication system 114 or via user interface 116.

The controller 112 may be configured to determine the PWM scheme by calculating the duty cycle of the power signal based on the one or more power source characteristics. For example, the controller 112 can be configured to calculate a duty cycle based on the one or more detected power source characteristics (e.g., based on supported wattage) for the aircraft. The controller 112 can be further configured to determine the PWM scheme for achieving the calculated duty cycle. Alternatively, the controller 112 may be configured to determine the PWM scheme based on the one or more power source characteristics by comparing the one or more power source characteristics with a lookup table including a plurality of power source characteristics and a plurality of PWM schemes corresponding to the different power source characteristics. For example, various power source characteristics (e.g., values or ranges of power requirements, supported wattages, etc.) may be stored in a listing with corresponding PWM schemes or duty cycles for achieving the target power requirements for the aircraft.

When the controller 112 is unable to detect an identifier and/or power source characteristics for the aircraft, or when there are no lookup table entries corresponding to the detected identifier and/or power source characteristics, the controller 112 may be configured to set the PWM scheme to a default PWM scheme. For example, in such cases, the controller 112 may be configured to set the PWM scheme to a PWM scheme associated with a default duty cycle (e.g., 70% duty cycle, 60% duty cycle, 50% duty cycle, or less).

The controller 112 of the invention is communicatively coupled to a user interface 116. The controller 112 may be configured to receive a user-input temperature setting, duty cycle, identifier, power source characteristics, and/or power requirement via the user interface 116. In embodiments, the user interface 116 may include, but is not limited to, a display, a touchscreen display, touch panel, touchpad, keyboard, keypad, knob, buttons, switches, or any combination thereof. In some embodiments, the user interface 116 comprises a personal electronic device (e.g., mobile device, personal computer, etc.) that is communicatively coupled to the controller 112 via the aircraft communication system 114. In the invention, what has been received via the user interface 116 can be used to override the controller programming, for example, to manually set the duty cycle or target power level/requirement.

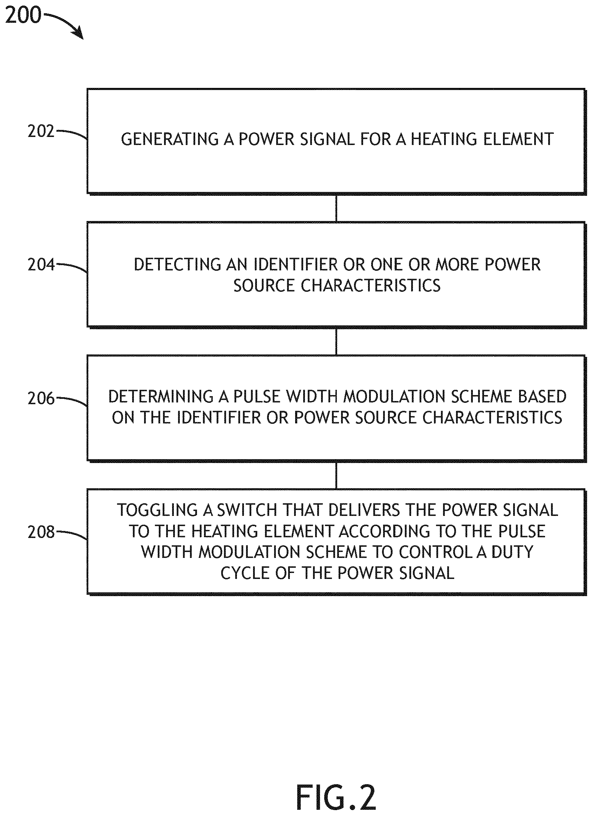

FIG. 2 comprises some of the steps of the method 200 according to the present invention for controlling the variable power water heater 101 described herein. In general, any steps or operations of disclosed processes (e.g., method 200) may be performed in an arbitrary order, unless otherwise provided in the claims.

At step 202, the method 200 includes generating a power signal for a heating element 102. For example, the power supply circuit 106 may be configured to generate a power signal for the heating element 102.

At step 204, the method 200 includes detecting an identifier or one or more power source characteristics. For example, the controller 112 may be configured to detect the identifier or the one or more power source characteristics via an interface connection between the controller 112 and the aircraft communication system 114 and/or the aircraft power system 108. In another example, the controller 112 can be configured to receive the identifier or the one or more power source characteristics in a data signal communicated via the aircraft communication system 114 or via user interface 116.

At step 206, the method 200 includes determining a PWM scheme based on the identifier or the one or more power source characteristics. For example, the controller 112 may be configured to determine the PWM scheme based on the identifier by comparing the identifier with a lookup table including a plurality of identifiers and a plurality of PWM schemes corresponding to the plurality of identifiers. In another example, the controller 112 can be configured to calculate a duty cycle based on the one or more detected power source characteristics and further configured to determine the PWM scheme for achieving the calculated duty cycle. Alternatively, the controller 112 may be configured to determine the PWM scheme based on the one or more power source characteristics by comparing the one or more power source characteristics with a lookup table including a plurality of power source characteristics and a plurality of PWM schemes corresponding to the different power source characteristics.

At step 208, the method 200 includes toggling a switch that delivers the power signal to the heating element according to the PWM scheme to control a duty cycle of the power signal. For example, the controller 112 may be configured to toggle the switch 110 according to the selected, calculated, or otherwise determined PWM scheme to control a duty cycle of the power signal transmitted from the power supply circuit 106 to the heating element 102. In this manner, water in the water tank 104 and/or heated tube/pipe can be heated by the heating element 102, and the power to the heating element 102 can be controlled by toggling the switch 110 according to the PWM-driven duty cycle to achieve target power requirements for the aircraft.

The method 200 may further include any step or operation implied or required by one or more embodiments of the variable power water heater 101/system 100 described herein. The variable power water heater 101/system 100 can also include any additional component or functionality expressed or implied by one or more embodiments of the method 200.

It is to be understood that implementations of the methods disclosed herein may include one or more of the steps described herein. Further, such steps may be carried out in any desired order and two or more of the steps may be carried out simultaneously with one another. Two or more of the steps disclosed herein may be combined in a single step, and in some implementations, one or more of the steps may be carried out as two or more sub-steps. Further, other steps or sub-steps may be carried in addition to, or as substitutes to one or more of the steps disclosed herein.

Although concepts have been described with reference to the contents illustrated in the attached drawing figures, equivalents may be employed and substitutions made herein without departing from the scope of the claims, if such equivalents and substitutions are covered by the terms used in the claims. Components illustrated and described herein are merely examples of a system/device and components that may be used to implement embodiments of the inventive concepts and may be replaced with other devices and components without departing from the scope of the claims, if they are covered by the combinations of features defined by the claims. Furthermore, any dimensions, degrees, and/or numerical ranges provided herein are to be understood as non-limiting examples unless otherwise specified in the claims.

## Claims

1. A control system for a variable power water heater (101), comprising:
a power supply circuit (106) configured to generate a power signal for a heating element (102);
a switch (110) comprising a triac configured to couple the power supply circuit to the heating element; and
a controller (112) configured to:
- detect an identifier via an interface connection between the controller and at least one of an aircraft communication system (114) or an aircraft power system (108);
- determine a pulse width modulation scheme based on the identifier by comparing the identifier with a lookup table including a plurality of identifiers and a plurality of pulse width modulation schemes corresponding to the plurality of identifiers; and
- toggle the switch according to a pulse width modulation scheme to control a duty cycle of the power signal transmitted from the power supply circuit to the heating element;
wherein the controller is configured to be communicatively coupled to a user interface to receive a user-input temperature setting, duty cycle, identifier, power source characteristics, and/or power requirement via the user interface for overriding the pulse width modulation scheme followed in accordance with the identifier.

2. The control system of claim 1, wherein the controller is further configured to set the pulse width modulation scheme to a default pulse width modulation scheme when the controller is unable to detect the identifier.

3. The control system of any preceding claim, wherein the controller is further configured to:
detect one or more power source characteristics; and
determine the pulse width modulation scheme based on the one or more power source characteristics.

4. The control system of claim 7, wherein the controller is configured to detect the one or more power source characteristics via an interface connection between the controller and at least one of an aircraft communication system or an aircraft power system.

5. The control system of claim 7, wherein the controller is configured to determine the pulse width modulation scheme by calculating the duty cycle of the power signal based on the one or more power source characteristics.

6. A variable power water heater, comprising:
a water tank;
a heating element disposed within or coupled to the water tank and the control system of any preceding claim.

7. The variable power water heater of claim 6, wherein the power supply circuit and the controller are integrated into a combined power supply and control circuit.

8. A method of controlling a variable power water heater, comprising:
generating (202) a power signal for a heating element;
detecting (204) an identifier via an interface connection between the controller and at least one of an aircraft communication system or an aircraft power system;
determining (206) a pulse width modulation scheme based on the identifier by comparing the identifier with a lookup table including a plurality of identifiers and a plurality of pulse width modulation schemes corresponding to the plurality of identifiers;
toggling (208) a switch that delivers the power signal to the heating element according to the pulse width modulation scheme to control a duty cycle of the power signal, and wherein the switch comprises a triac; and
receiving, via a user interface, a user-input temperature setting, duty cycle, identifier, power source characteristics, and/or power requirement for overriding the pulse width modulation scheme followed in accordance with the identifier.

## Patentansprüche

1. Steuersystem für einen Wassererhitzer (101) mit variabler Leistung, umfassend:
einen Leistungsversorgungskreis (106), welcher dazu konfiguriert ist, ein Leistungssignal zu erzeugen, um ein Heizelement (102) zu erhitzen;
einen Schalter (110), umfassend einen Triac, welcher dazu konfiguriert ist, den Leistungsversorgungskreis an das Heizelement zu koppeln; und
eine Steuerung (112), welche zu Folgendem konfiguriert ist:
- Erkennen einer Kennung über eine Schnittstellenverbindung zwischen der Steuerung und mindestens einem von einem Flugzeugkommunikationssystem (114) oder einem Flugzeugleistungssystem (108);
- Bestimmen eines Impulsdauer-Modulationsverfahrens basierend auf der Kennung durch ein Vergleichen der Kennung mit einer Nachschlagetabelle, welche eine Vielzahl von Kennungen und eine Vielzahl von Impulsdauer-Modulationsverfahren entsprechend der Vielzahl von Kennungen beinhaltet; und
- Auslösen des Schalters gemäß einem Impulsdauermodulationsverfahren, um einen Arbeitszyklus des Leistungssignals zu steuern, welches von dem Leistungsversorgungskreis zu dem Heizelement übertragen wird;
wobei die Steuerung dazu konfiguriert ist, kommunikativ an eine Nutzerschnittstelle gekoppelt zu sein, um über die Nutzerschnittstelle eine Nutzereingabetemperatureinstellung, einen Arbeitszyklus, eine Kennung, Leistungsquelleneigenschaften und/oder eine Leistungsanforderung zu empfangen, um das Impulsdauermodulationsverfahren außer Kraft zu setzen, welchem gemäß der Kennung gefolgt wurde.

2. Steuersystem nach Anspruch 1, wobei die Steuerung ferner dazu konfiguriert ist, das Impulsdauermodulationsverfahren auf ein Standardimpulsdauermodulationsverfahren einzustellen, wenn die Steuerung nicht dazu in der Lage ist, die Kennung zu erkennen.

3. Steuersystem nach einem der vorstehenden Ansprüche, wobei die Steuerung ferner zu Folgendem konfiguriert ist:
Erkennen einer oder mehrerer Leistungsquelleneigenschaften; und
Bestimmen des Impulsdauermodulationsverfahrens basierend auf der einen oder den mehreren Leistungsquelleneigenschaften.

4. Steuersystem nach Anspruch 7, wobei die Steuerung dazu konfiguriert ist, die eine oder die mehreren Leistungsquelleneigenschaften über eine Schnittstellenverbindung zwischen der Steuerung und mindestens einem von einem Flugzeugkommunikationssystem oder einem Flugzeugleistungssystem zu erkennen.

5. Steuersystem nach Anspruch 7, wobei die Steuerung dazu konfiguriert ist, das Impulsdauermodulationsverfahren durch ein Berechnen des Arbeitszyklus des Leistungssignals basierend auf der einen oder den mehreren Leistungsquelleneigenschaften zu bestimmen.

6. Wassererhitzer mit variabler Leistung, umfassend:
einen Wassertank;
ein Heizelement, welches in dem Wassertank und dem Steuersystem nach einem der vorstehenden Ansprüche angeordnet ist oder daran gekoppelt ist.

7. Wassererhitzer mit variabler Leistung nach Anspruch 6, wobei der Leistungsversorgungskreis und die Steuerung in einen kombinierten Leistungsversorgungs- und Steuerkreis integriert sind.

8. Verfahren zum Steuern eines Wassererhitzer mit variabler Leistung, umfassend:
Erzeugen (202) eines Leistungssignals für ein Heizelement;
Erkennen (204) einer Kennung über eine Schnittstellenverbindung zwischen der Steuerung und mindestens einem von einem Flugzeugkommunikationssystem oder einem Flugzeugleistungssystem;
Bestimmen (206) eines Impulsdauer-Modulationsverfahrens basierend auf der Kennung durch ein Vergleichen der Kennung mit einer Nachschlagetabelle, welche eine Vielzahl von Kennungen und eine Vielzahl von Impulsdauer-Modulationsverfahren entsprechend der Vielzahl von Kennungen beinhaltet;
Auslösen (208) eines Schalters, welcher das Leistungssignal gemäß dem Impulsdauermodulationsverfahren an das Heizelement liefert, um einen Arbeitszyklus des Leistungssignals zu steuern, und wobei der Schalter einen Triac umfasst; und
Empfangen einer Nutzereingabetemperatureinstellung, eines Arbeitszyklus, einer Kennung, einer Leistungsquelleneigenschaften und/oder einer Leistungsanforderung durch eine Nutzerschnittstelle, um das Impulsdauermodulationsverfahren außer Kraft zu setzen, welchem gemäß der Kennung gefolgt wurde.

## Revendications

1. Système de commande pour un chauffe-eau à puissance variable (101), comprenant :
un circuit d'alimentation (106) configuré pour générer un signal de puissance pour un élément chauffant (102) ;
un commutateur (110) comprenant un triac configuré pour coupler le circuit d'alimentation à l'élément chauffant ; et
un dispositif de commande (112) configuré pour :
- détecter un identifiant par l'intermédiaire d'une connexion d'interface entre le dispositif de commande et au moins l'un d'un système de communication d'aéronef (114) ou d'un système d'alimentation d'aéronef (108) ;
- déterminer un schéma de modulation de largeur d'impulsion sur la base de l'identifiant en comparant l'identifiant avec une table de consultation comportant une pluralité d'identifiants et une pluralité de schémas de modulation de largeur d'impulsion correspondant à la pluralité d'identifiants ; et
- basculer le commutateur selon un schéma de modulation de largeur d'impulsion pour commander un rapport cyclique du signal de puissance transmis depuis le circuit d'alimentation vers l'élément chauffant ;
dans lequel le dispositif de commande est configuré pour être couplé en communication à une interface utilisateur afin de recevoir un réglage de température d'entrée utilisateur, un rapport cyclique, un identifiant, des caractéristiques de source de puissance et/ou une exigence de puissance par l'intermédiaire de l'interface utilisateur pour annuler le schéma de modulation de largeur d'impulsion suivi conformément à l'identifiant.

2. Système de commande selon la revendication 1, dans lequel le dispositif de commande est en outre configuré pour régler le schéma de modulation de largeur d'impulsion sur un schéma de modulation de largeur d'impulsion par défaut lorsque le dispositif de commande est incapable de détecter l'identifiant.

3. Système de commande selon une quelconque revendication précédentes, dans lequel le dispositif de commande est en outre configuré pour :
détecter une ou plusieurs caractéristiques de source de puissance ; et
déterminer le schéma de modulation de largeur d'impulsion sur la base des une ou plusieurs caractéristiques de source de puissance.

4. Système de commande selon la revendication 7, dans lequel le dispositif de commande est configuré pour détecter les une ou plusieurs caractéristiques de source de puissance par l'intermédiaire d'une connexion d'interface entre le dispositif de commande et au moins l'un d'un système de communication d'aéronef ou d'un système d'alimentation d'aéronef.

5. Système de commande selon la revendication 7, dans lequel le dispositif de commande est configuré pour déterminer le schéma de modulation de largeur d'impulsion en calculant le rapport cyclique du signal de puissance sur la base des une ou plusieurs caractéristiques de source de puissance.

6. Chauffe-eau à puissance variable, comprenant :
un réservoir d'eau ;
un élément chauffant disposé à l'intérieur du réservoir d'eau et du système de commande ou couplé à ceux-ci selon une quelconque revendication précédente.

7. Chauffe-eau à puissance variable selon la revendication 6, dans lequel le circuit d'alimentation et le dispositif de commande sont intégrés dans un circuit combiné d'alimentation et de commande.

8. Procédé de commande d'un chauffe-eau à puissance variable, comprenant :
la génération (202) d'un signal de puissance pour un élément chauffant ;
la détection (204) d'un identifiant par l'intermédiaire d'une connexion d'interface entre le dispositif de commande et au moins l'un d'un système de communication d'aéronef ou d'un système d'alimentation d'aéronef ;
la détermination (206) d'un schéma de modulation de largeur d'impulsion sur la base de l'identifiant en comparant l'identifiant avec une table de consultation comportant une pluralité d'identifiants et une pluralité de schémas de modulation de largeur d'impulsion correspondant à la pluralité d'identifiants ;
le basculement (208) d'un commutateur qui délivre le signal de puissance à l'élément chauffant selon le schéma de modulation de largeur d'impulsion pour commander un rapport cyclique du signal de puissance, et dans lequel le commutateur comprend un triac ; et
la réception, par l'intermédiaire d'une interface utilisateur, d'un réglage de température d'entrée utilisateur, d'un rapport cyclique, d'un identifiant, de caractéristiques de source de puissance et/ou d'une exigence de puissance pour annuler le schéma de modulation de largeur d'impulsion suivi conformément à l'identifiant.
